# EUROPEAN PATENT SPECIFICATION

(11) **EP 2 808 237 B1**
(45) Date of publication and mention of the grant of the patent: **03.02.2016**
(21) Application number: 14380016.7
(22) Date of filing: 28.05.2014
(51) Int. Cl.: B62K 19/36

(54) **Clamp for fixing the position of a seat post in relation to a bicycle frame**
Klemme zur Lagefixierung einer Sattelstütze in Bezug auf einem Fahrradrahmen
Pince pour fixer la position d'un montant de siège par rapport à un cadre de bicyclette

(30) Priority: 31.05.2013 ES 201300522
(43) Date of publication of application: 03.12.2014
(73) Proprietor: Orbea, S. Coop. Ltda., 48269 Mallabia (Bizkaia) (ES)
(72) Inventor: Auzmendi Arkarazo, Beñat, 48269 Mallabia (Bizkaia) (ES)
(74) Representative: Cueto, Sénida

(56) References cited:
- CN-U- 201 677 997
- DE-U1-202004 010 405
- US-A- 5 133 224

## Description

### Technical field

The invention relates to a clamp for fixing the position of a seat post in relation to a bicycle frame.

### Prior art

In numerous bicycle models, the seat position is adjustable in height in relation to the bicycle frame. To provide this adjustability, the seat is connected to a tube, commonly known as the seat post, which in turn is inserted to a variable depth in a hollow cylindrical portion of the frame known as the seat tube. By varying the depth to which the seat post is inserted into the seat tube, adjustment of the seat height in relation to the frame is achieved. In addition, bicycles usually have some kind of mechanism that enables the seat tube to be tightened against the seat post so that the seat post can be fixed in a selected position in relation to the frame and thus set the seat height. These mechanisms can usually be loosened and tightened by the user, to enable the seat height to be readjusted with relative ease.

A first type of known mechanism is an elastic clamp that surrounds the seat tube and whose ends are interconnected by means of a nut and bolt set, or equivalent. To successfully fix the seat post in relation to the frame, the user must tighten the nut and bolt by using an adjustable spanner, Allen key (also known as a hex key) or some other applicable tool. As the user tightens this connection, the clamp becomes adjusted with increased pressure against the outside walls of the seat tube and, consequently, the inner walls of the seat tube exert increasing pressure against the outer walls of the seat post. Finally, a situation is reached in which the pressure of the inner walls of the seat tube against the outer walls of the seat post is high enough to prevent the seat post from moving longitudinally or rotationally inside the seat tube. On the other hand, to enable movement of the seat post in relation to the frame, the user must loosen the nut and bolt connection. As the user loosens this connection, the pressure exerted by the inner walls of the seat tube on the outer walls of the seat post is reduced. Once the connection is loose enough for the user pushing or pulling the seat post to overcome the friction force exerted by the pressure of the inner walls of the seat tube against the seat post, the user is able to move the seat post.

Alternatively to the mechanism described above, a second type of clamp is known that allows the user to tighten or loosen the clamp without using tools. This second type of clamp includes a body in the form of an open ring and a handle. The handle is connected to one end of a pin that closes off the body, and can be folded against the body. The handle includes a cam surface that exerts increased pressure on the body as the handle is folded against the body, enabling the ends of the body to get closer together and tightening of the seat post and frame housed in the internal space of the open ring. The disadvantage of this type of conventional clamp is that it suffers excessive wear and deterioration due to the friction between the cam surface of the handle and the body.

Prior art document US 5 133 224 disclsoes a clamp in accordance with the preamble of claim 1.

It is an objective of this invention to provide a new clamp design that can be operated by the user without the need for tools and, at the same time, does not show wear or deterioration over time, thereby increasing the service life of the product and guaranteeing its optimum performance over time.

### Brief description of the invention

It is an object of this invention, in accordance with claim 1, to provide a clamp to fix the position of a seat post in relation to a bicycle frame, wherein the clamp includes an elastic body arranged around an internal space that is used to house a portion of the frame and a portion of the seat post intended to be tightened against one another by the clamp. The body includes a first portion and a second portion, facing each other at a variable distance, allowing the size of the internal space to be increased or decreased in order to increase or decrease the tightness of the frame and seat post portions. The first portion provides a first articulated connection and the second portion provides a second articulated connection. In addition, the clamp includes a handle connected to the second articulated connection and holder of a third articulated connection that is eccentric to the second articulated connection. A pin is fixed between the first articulated connection -located in the first portion of the body- and the third articulated connection -located eccentrically on the handle-. The pin is fixed longitudinally to the first articulated connection and the third articulated connection in order to pull the first portion of the body towards the second portion of the body. The handle has a grip area to allow a user to cause turning of the handle in relation to the second articulated connection, and the subsequent turning of the third articulated connection eccentrically to the second articulated connection. The distance between the first articulated connection and the third articulated connection is adjustable.

Therefore, according to the invention, a clamp is provided with a pin which, instead of directly connecting the two portions which have to be tightened or approach each other, connects one of these portions of the body (the first portion) with a point of a handle that rotates eccentrically in relation to the other portion of the body (the second portion). When the user tightens the handle against the body to cause tightening of the clamp against the portion of the frame and the portion of the seat post housed in the Internal space, this eccentric rotation causes the tightening to reach its highest level when the user turns the handle until the three articulated connections are aligned. From that moment, if the user finishes turning the handle against the body, a slight misalignment of the three articulated connections occurs, which, while still guaranteeing the tightness between the seat post and the frame, also has some interesting effects. In the first place, the misalignment causes the user to feel a kind of click effect when finishing turning the handle against the body and, therefore, tightening the clamp. In the second place, since the elastic body tends to separate the first portion from the second portion, the clamp tends not to return to the situation of alignment, i.e., the clamp stays securely folded against the body and therefore the clamp is securely tightened against the frame and seat post. Consequently, the clamp according to the invention is simple, convenient and intuitive to use, and also ensures the effective, stable tightening of the seat post and frame. In addition, the fact that the distance between the first articulated connection and the third articulated connection is adjustable allows the user to adjust the gripping force of the clamp at his or her convenience.

### Brief description of the drawings

Details of the invention can be seen in the accompanying drawings, which do not seek to restrict the scope of the invention:
- Figure 1 shows an exploded view of an embodiment of a clamp according to the invention.
- Figures 2 and 3 show two perspective views of the clamp of the previous figure, in an assembled state.
- Figures 4 through 6 show a tightening sequence for the clamp of the previous figures.
- Figures 7 through 9 show a tightening sequence for a clamp known in prior art.

### Detailed description of the invention

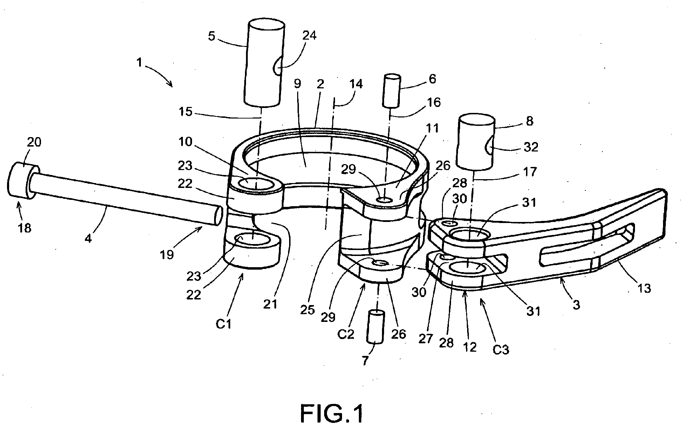

Figure 1 shows an embodiment of a clamp in accordance with the invention. The clamp (1) mainly comprises a body (2), a handle (3) and a pin (4). To enable articulated interconnection of these items, the clamp (1) also includes several rods (5, 6, 7, 8), whose specific function is described later.

The body (2) is a component with some elasticity, i.e., it is capable of being deformed and recovering its initial shape, and is arranged around an internal space (9). The internal space (9) is intended to house a portion of the frame and a portion of the seat post, with the portion of the seat post usually housed inside the portion of the frame and the portion of the frame needing to be tightened against the portion of the seat post. The body (2) includes a first portion (10) and a second portion (11) facing each other. In the embodiment shown, the body (2) has the shape of an open elastic ring with two ends, i.e. it is approximately C-shaped. The first portion (10) of the body (2) is one of the ends of the open ring and the second portion (11) of the body (2) is the other end of the open ring. Making the body (2) in the shape of an open ring is a sturdy solution that optimises the use of materials and is cost-effective, so as to build an elastic body (2) capable of being tightened against a portion of the frame and a portion of the seat post of a bicycle.

Due to the elastic nature of the body (2), the distance between the first portion (10) and the second portion (11) is variable, which allows the size of the internal space (9) to be increased or decreased and produce the resulting increase or reduction of the tightening of the portion of the seat post and the portion of frame housed in the internal space (9). A first articulated connection (C1) is provided in the first portion (10) of the body (2); in this case in particular, as will be seen later in greater detail, the first articulated connection (C1) is provided by the rod (5). A second articulated connection (C2) is provided in the second portion (11); in this case in particular, as will be seen later in greater detail, the second articulated connection (C2) is provided by the rods (6, 7).

The handle (3) includes a main portion (12), from which a grip area (13) protrudes. The main portion (12) is connected to the second articulated connection (C2) and is also the holder of a third articulated connection (C3) that is eccentric to the second articulated connection (C2). The grip area (13) provides a gripping area for a user to cause the handle (3) to turn in relation to the second articulated connection (C2). In the embodiment shown, the handle (3) is shaped in such a way that the grip area (13) is oriented towards the body (2) so the user who wants to tighten the clamp (1) against the portion of the frame and the portion of the seat post is intuitively suggested to do so by turning the handle (3) in a direction that moves the grip area (13) closer to the body (2).

As shown in Figure 1, the internal space (9) is arranged around a central longitudinal axis (14), which will normally coincide with the longitudinal axis of the portion of the frame and the portion of the seat post that are to be housed in this internal space (9). In turn, the three articulated connections (C1, C2, C3) provide rotation in relation to three respective pivot axes (15, 16, 17). According to the invention, the pivot axes (15, 16, 17) of the three articulated connections (C1, C2, C3) are parallel to each other and, as shown in the figure, are preferably parallel tao the central longitudinal axis (14).

In turn, the pin (4) is an elongated body with a first end (18), a second end (19) and, in this case, a head (20). The ends (18, 19) of the pin (4) are fixed longitudinally to the first articulated connection (C1) and to the third articulated connection (C3). In other words, movement of the pin (4) in the direction of the longitudinal axis of the pin (4) is not allowed, and the pin (4) is capable of pulling the first portion (10) of the body (2) towards the second portion (11) of the body (2).

In the embodiment shown, the first portion (10) of the body (2), i.e., the area of the body (2) where the first articulated connection (C1) is located, includes an inner cavity (21). In the embodiment in the figure, it can be seen that the inner cavity (21) is a space between two protuberances (22), top and bottom, located in the first portion (10). The connection of the first end (18) of the pin to the first articulated connection (C1) takes place in this inner cavity (21). The fact that the articulated connection (C1) and the pin (4) are housed inside the first portion (10) and not, for example, attached externally to the first portion (10), is a preferred solution because t it takes maximum advantage of the volume of the first portion (10) while also providing a protected and aesthetically clean articulated connection (C1).

In the embodiment shown in the figure, the rod (5) is connected in a pivoting manner to the first portion (10) of the body (2), specifically inserted into two through holes (23) cut in the protuberances (22). The rod (5) includes a through hole (24) to which the first end (18) of the pin (4) is fixed. In this way, the rod (5) provides the first articulated connection (C1) between the pin (4) and the first portion (10). This solution is constructively simple and fully functional and robust, allowing optimal performance of the first articulated connection (C1) arranged inside the first portion (10) of the body (2).

Similarly, the second portion (11) of the body (2), i.e., the area of the body (2) where the second articulated connection (C2) is located, includes an inner cavity (25). In the embodiment in the figure, it can be seen that this inner cavity (25) is again a space provided between two protuberances (26), top and bottom, located in the second portion (11). The connection of the main portion (12) of the handle (3) to the second articulated connection (C2) takes place in this inner cavity (25). In addition, the main portion (12) includes its own inner cavity (27), which in the embodiment in the figure is also a space provided between two protuberances (28), top and bottom, included in the main portion (12). The connection of the second end (19) of the pin (4) to the third articulated connection (C3) takes place in this inner cavity (27). This successively interior arrangement of the different articulated connections again allows obtaining an aesthetically clean opposite end of the clamp (1), making efficient use of space and protecting the articulated connections.

In the embodiment in the figure, the protuberances (26) in the second portion (11) of the body (2) include two through holes (29) penetrated by respective rods (6, 7). These rods (6, 7) are also connected to holes (30) in the main portion (12) of the handle (3). The rods (6, 7) are rotatable in relation to the second portion (11), thus providing the second articulated connection (C2), i.e., the articulated connection between the main portion (12) of the handle (3) and the second portion (11) of the body (2). At the same time, once the rods (6, 7) are assembled, they leave a free intermediate space through which the pin (4) can move rotationally when the user turns the handle (3), as will be shown in later figures, allowing the relative position of the three articulated connections (C1, C2, C3) to vary. In turn, the rod (8) in the clamp (1) is rotationally connected to the main portion (12) of the handle (3), specifically between two through holes (31) in the protuberances (28) in the main portion (12) of the handle (3). The rod (8) is, in turn, equipped with a transverse hole (32) that connects the second end (19) of the pin (4), so that this rotatable rod (8) provides the third articulated connection (C3), between the pin (4) and the handle (3).

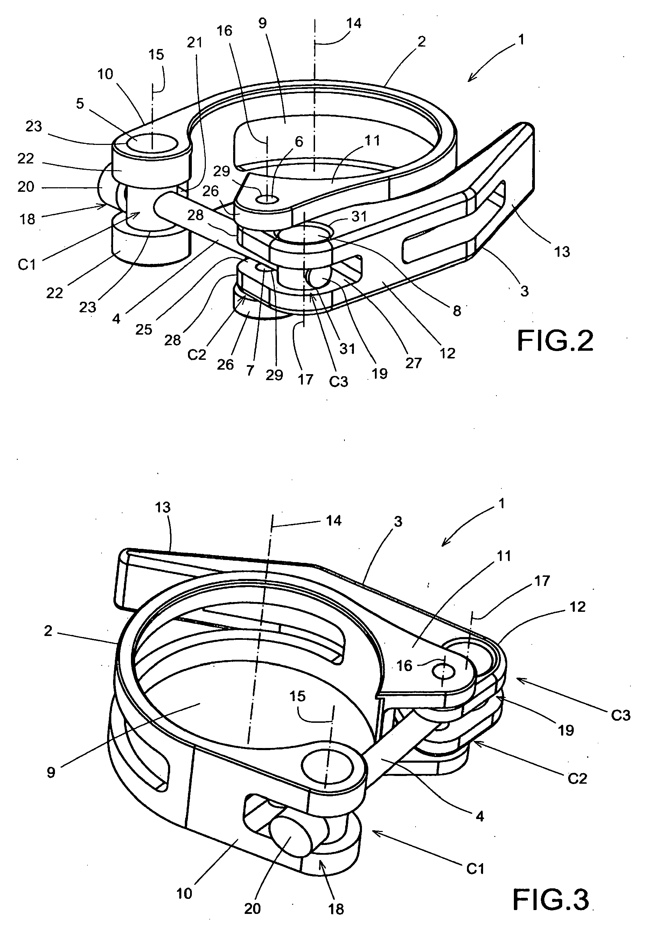

Figures 2 and 3 show two perspective views of the clamp (1) described, once all the parts have been assembled together and with the clamp (1) represented in a completely closed position, in which the handle (3) is folded against the body (2). These figures allow illustrating how the pin (4) is arranged inside the inner cavity (27) in the main portion (12) of the handle (3), and how the main portion (12), in turn, is arranged partially inside the inner cavity (25) in the second portion (11) of the body (2).

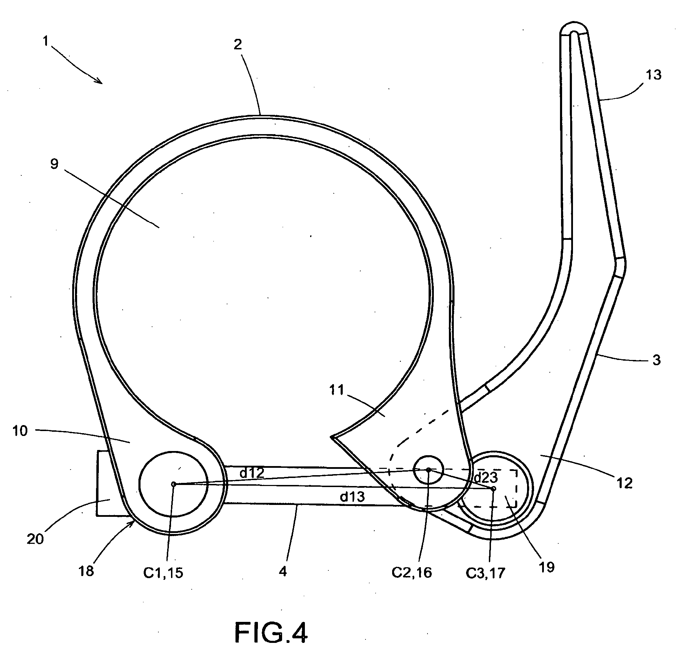

Figure 4 to 6 show a tightening sequence of the clamp (1) of the previous figures. In order to simplify the explanation of the sequence, the figures show the three articulated connections (C1, C2, C3) schematically represented by their respective pivot axes (15, 16, 17). In addition, the distances between the pivot axes (15, 16, 17) of the different articulated connections (C2, C2, C3) are indicated in all three figures, with d12 being the distance between the pivot axis (15) of the first articulated connection (C1) and the pivot axis (16) of the second articulated connection (C2), with d13 being the distance between the pivot axis (15) of the first articulated connection (C1) and the pivot axis (17) of the third articulated connection (C3), and with d23 being the distance between the pivot axis (16) of the second articulated connection (C2) and the pivot axis (17) of the third articulated connection (C3). Since the ends of the pin (4) are fixed to (i.e., do not present any longitudinal movement in relation to) the respective articulated connections (C1, C3), distance d13 is constant. Similarly, since the position of the articulated connections (C2, C3) in the handle (3) is fixed, distance d23 is also constant.

The clamp (1) as illustrated in Figure 4 is arranged in a position in which the handle (3) is quite separated from the body (2). The third articulated connection (C3) is eccentrically rotated clockwise in relation to the second articulated connection (C2) and is arranged in an initial position closer to the first articulated connection (C1). In this position, a relaxation of the elastic deformation of the body (2) is allowed, and the portions (10, 11) of the body (2) can be elastically arranged relatively distant (i.e., distance d12 can be relatively high). Therefore, in this initial situation, the clamp (1) is loosened and a portion of the seat post and a portion of the frame that were housed in the internal space (9) in the clamp (1) would be free to move in relation to each other.

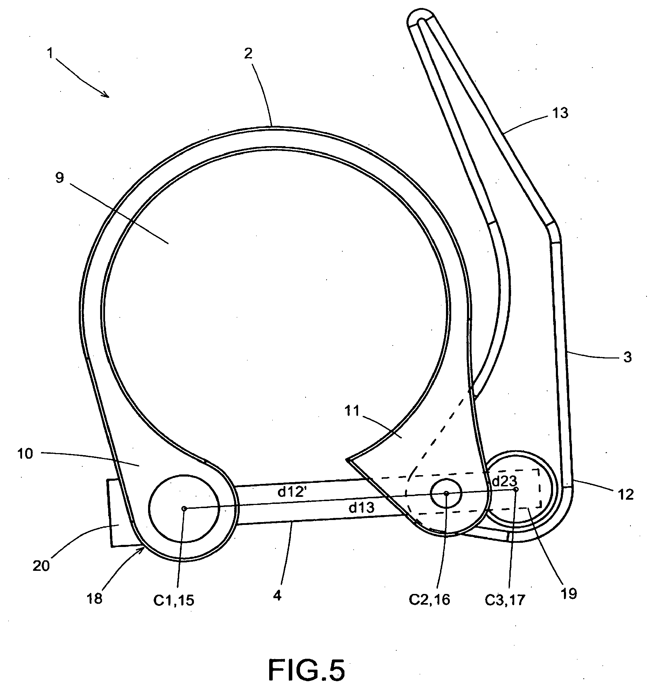

In Figure 5, the clamp (1) is in a situation in which the user has turned the handle (3) anticlockwise, intuitively pushing the grip area (13) towards the body (2), until the three articulated connections (C1, C2, C3) have become aligned. In this alignment situation, since the distances d13 and d23 are constant, the distance between the pivot axis (15) of the first articulated connection (C1) and the pivot axis (16) of the second articulated connection (C2) has been reduced until it reaches a minimum value d12'. In consequence, the first portion (10) and the second portion (11) of the body (2) are as close as possible and the internal space (9) has been compressed as much as possible, maximizing the tightness of the clamp (1) against the portion of the frame and the portion of the seat post that were housed in this internal space (9). To reach this situation of maximum tightness, the user has had to exert increasing force on the handle (3).

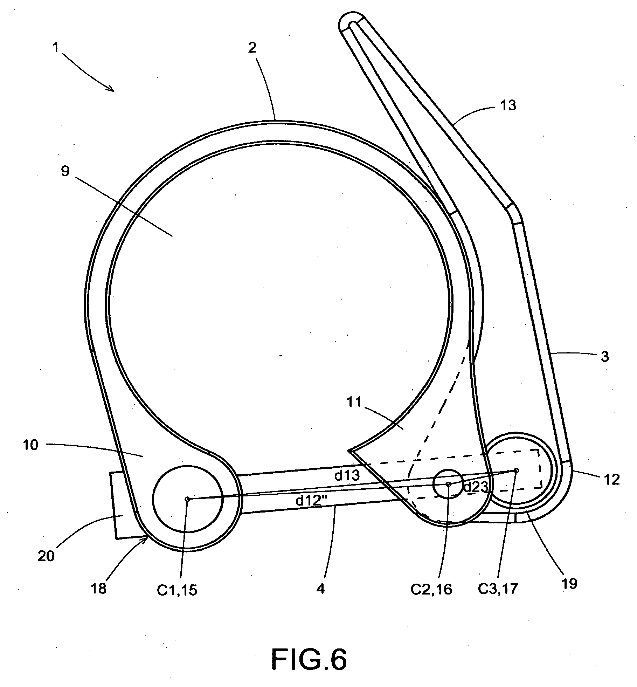

In Figure 6, the clamp (1) is in a situation in which, after the user has continued turning the handle (3) anti-clockwise, the handle (3) has come into contact with the body (2), its turning thereby coming to an end. Because the user has continued turning the handle (3) with respect to the situation of the previous figure, the pivot axes (15, 16, 17) of the articulated connections (C1, C2, C3) are no longer aligned and therefore the distance between the pivot axis (15) of the first articulated connection (C1) and the pivot axis (16) of the second articulated connection (C2), represented as d12" is slightly higher than in the alignment situation shown in the previous figure. This means that the body (2) has been slightly relaxed and the portions (10, 11) have become slightly separated, loosening the grip inside the internal space (9) while maintaining a degree of tightness high enough for the clamp (1) to continue to perform its role of tightening the seat post portion and the frame portion and preventing relative movement between both portions. In order to reach this final situation of certain relaxation, the user has only had to overcome the alignment situation in Figure 5; from that moment the clamp (1) has tended to automatically continue rotation of the handle (3) towards a situation of greater misalignment. This effect of overcoming a maximum tightening point is perceived by the user as a kind of click, confirming that tightening has been achieved, resulting in extremely intuitive use of the clamp (1) for the user. Moreover, the fact that the handle (3) automatically tends to stay against the body (2) and not to return to the alignment situation in Figure 5 allows the clamp (1) of the invention to provide stable tightness over time and not to come loose.

In the case of the present embodiment, as shown in Figures 1 to 3, the head (20) of the pin (4) has a cross-section that is dimensionally larger than the transverse hole (24) in the rod (5). This allows a simple fixed longitudinal connection of the first end (18) of the pin (4) to the first articulated connection (C1).

The distance d13 between the first articulated connection (C1) and the third articulated connection (C3) is adjustable. This means that the force for tightening the clamp (1) can be adjusted to the user's convenience. To do this, for example, the second end (19) of the pin (4) can be threaded so that the depth of insertion of this second end (19) into the transverse hole (32) in the rod (8) can be adjusted. This threaded second end (19) of the pin (4) preferably screws into a complementary thread provided in the transverse hole (32) of the rod (8). The head (20) of the pin (4) preferably has a torque application area to allow the second end (19) of the pin to be screwed in; the torque-application section can be, for example, an anti-rotational recess configured to receive a screwdriver tip or a hex key (Allen key).

As previously mentioned, the connection of the first end (18) of the pin (4) to the first portion (10)-of-the body (2) prevents longitudinal movement of the pin (4) in relation to the first portion (10) of the body (2) in a travel direction of the pin (4) towards the third articulated connection (C3). However, in this embodiment, the pin (4) can move back in the opposite direction in relation to the first portion (10) of the body (2). On the contrary, the threaded connection of the second end (19) of the pin (4) to the third articulated connection (C3) prevents longitudinal movement of the pin (4) in any direction in relation to the third articulated connection (C3). In any case, for the purposes of the present invention, what is required is that the connection of the ends (18, 19) of the pin (4) is at least such that it prevents longitudinal movement of the pin (4) in relation to the first portion (10) of the body (2) in a direction towards the second portion (11) of the body (2) and therefore succeeds in the pin (4) pulling the first portion (10) towards the second portion (11).

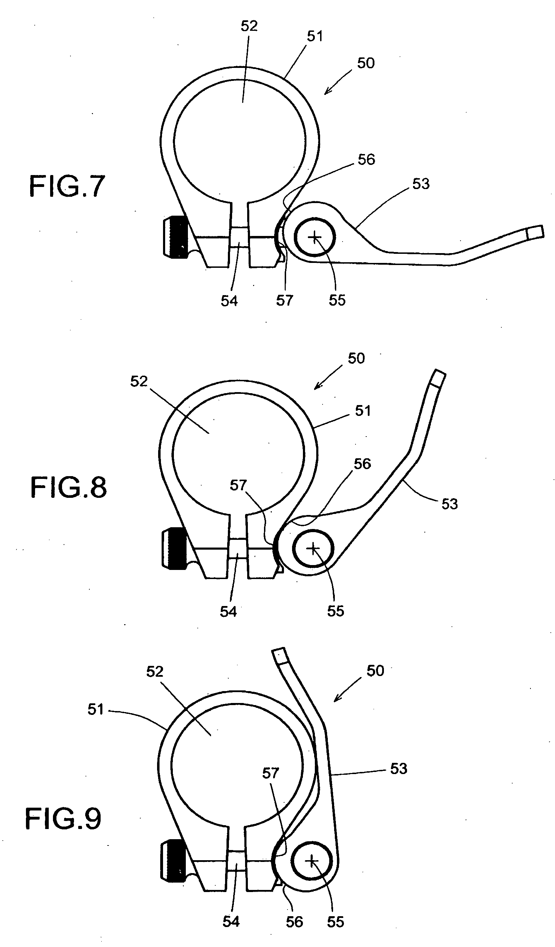

Figures 7 through 9 show a tightening sequence of a clamp known in prior art. In this case, the conventional clamp (50) includes a body (51) in the form of an open ring with an internal space (52), and a handle (53). The handle (53) is connected to one end of a pin (54) and can be rotated in relation to a pivot axis (55) to fold against the body (51), as shown in the sequence of figures. The pin (54) is arranged between the two ends of the body (51) in the form of an open ring. The handle (53) includes a cam surface (56) that exerts an increasing force on a surface (57) of one end of the body (51) as the handle (53) is being rotated, allowing the ends of the body (51) to approach each other and tightening the seat post and the frame housed in the internal space (52). The disadvantage of this type of conventional clamps is that they suffer excessive wear and deterioration, due to the friction between the cam surface (56) of the handle (53) and the surface (57) of the body (51). The clamp (1) of the present invention does not suffer from this problem because, rather than its operation being based on friction, it works based on a suitable relative position of the pivot axes (15, 16, 17) of the three articulated connections (C1, C2, C3).

## Claims

1. Clamp (1) for fixing the position of a seat post in relation to a bicycle frame, said clamp includes:
- an elastic body (2) arranged around an internal space (9) for housing a portion of the frame and a portion of the seat post, wherein said body (2) comprises a first portion (10) and a second portion (11) facing each other at a variable distance, allowing the size of the internal space (9) to be increased or reduced, wherein a first articulated connection (C1) is provided in said first portion (10) and a second articulated connection (C2) is provide in said second portion (11);
- a handle (3) connected to the second articulated connection (C2), said handle (3) comprising a third articulated connection (C3) that is eccentric to the second articulated connection (C2), wherein said handle (3) comprises a grip area (13) to allow a user to cause the handle (3) to turn in relation to the second articulated connection (C2), wherein
- the articulated connections (C1, C2, C3) rotate in relation to three respective pivot axes (15, 16, 17) that are parallel to one another; and **characterised in that**
- a pin (4) fixed longitudinally to the first articulated connection (C1) and to the third articulated connection (C3) for pulling the first portion (10) of the body (2) towards the second portion (11) of the body (2); wherein
- the distance (d13) between the first articulated connection (C1) and the third articulated connection (C3) is adjustable by operating said pin (4).

2. Clamp (1), according to claim 1, **characterised in that** the pivot axes (15, 16, 17) of the articulated connections (C1, C2, C3) are misaligned when the handle (3) is turned to a maximum against the body (2).

3. Clamp (1), according to claim 1, **characterised in that** the body (2) has the shape of an open elastic ring with two ends, wherein the first portion (10) is one end of the ring and the second portion (11) is another end of the ring.

4. Clamp (1), according to claim 1, **characterised in that** the first portion (10) comprises an inner cavity (21), inside which a first end (18) of the pin (4) is connected to the first articulated connection (C1).

5. Clamp (1), according to claim 4, **characterised in that** it comprises a rod (5) connected rotationally to the first portion (10) of the body (2), and **in that** the first end (18) of the pin (4) is connected to a transverse hole (24) in the rod (5), with said rod (5) providing the first articulated connection (C1) between the pin (4) and the first portion (10).

6. Clamp (1), according to claim 5, **characterised in that** the pin (4) comprises a head (20) with a larger cross section than the transverse hole (24) in the rod (5).

7. Clamp (1), according to claim 1, **characterised in that** the second portion (11) comprises an inner cavity (25) inside which a main portion (12) of the handle (3) is connected to the second articulated connection (C2), wherein said main portion (12), in turn, comprises an inner cavity (27) inside which a second end (19) of the pin (4) is connected to the third articulated connection (C3).

8. Clamp (1), according to claim 7, **characterised in that** it comprises a rod (8) rotationally connected to the main portion (12) of the handle (3), and **in that** the second end (19) of the pin (4) is connected to a transverse hole (32) in said rod (8), with said rod (8) providing the third articulated connection (C3) between the pin (4) and the handle (3).

9. Clamp (1), according to claim 8, **characterised in that** the second end (19) of the pin (4) is threaded so that the depth of insertion of said second end (19) into the transverse hole (32) in the rod (8) can be adjusted.

10. Clamp (1), according to claim 9, **characterised in that** the transverse hole (32) in the second end (19) of the pin (4) has a complementary thread.

## Patentansprüche

1. Klemme (1) für die Fixierung der Position einer Sattelstütze gegenüber einem Fahrradrahmen. Besagte Klemme umfasst:
- einen elastischen Körper (2), der rund um einen Innenraum (9) angeordnet ist, zur Aufnahme eines Teils des Rahmens und eines Teils der Sattelstütze, wobei besagter Körper (2) einen ersten Abschnitt (10) und einen zweiten Abschnitt (11) umfasst, die sich in einem variablen Abstand gegenüberliegen, womit die Größe des Innenraums (9) erhöht oder verringert werden kann, wobei für eine erste Gelenkverbindung (C1) in besagtem ersten Abschnitt (10) und für eine zweite Gelenkverbindung in besagtem zweitem Abschnitt (11) gesorgt wird;
- ein Griff (3), der mit der zweiten Gelenkverbindung (C2) verbunden ist, wobei besagter Griff (3) eine dritte Gelenkverbindung umfasst (C3), die zu der zweiten Gelenkverbindung (C2) exzentrisch ist, wobei besagter Griff (3) eine Greiffläche (13) umfasst, damit ein Benutzer den Griff (3) um die zweite Gelenkverbindung (C2) zum Drehen bringen kann, wobei
- die Gelenkverbindungen (C1, C2, C3) um die drei jeweiligen Schwenkachsen (15, 16, 17) rotieren, die parallel zueinander liegen; und **dadurch gekennzeichnet, dass**
- ein längs zu der ersten Gelenkverbindung (C1) und zu der dritten Gelenkverbindung (C3) befestigter Stift (4), zum Ziehen des ersten Abschnitts (10) des Körpers (2) in Richtung des zweiten Abschnitts (11) des Körpers (2) dient; wobei
- der Abstand (d13) zwischen der ersten Gelenkverbindung (C1) und der dritten Gelenkverbindung (C3) durch das Bedienen von besagtem Stift (4) verstellbar ist.

2. Klemme (1), gemäß Anspruch 1, **dadurch gekennzeichnet, dass** die Schwenkachsen (15, 16, 17) der Gelenkverbindungen (C1, C2, C3) nicht fluchtend ausgerichtet sind, wenn der Griff (3) maximal gegen dem Körper (2) gedreht wird.

3. Klemme (1), gemäß Anspruch 1, **dadurch gekennzeichnet, dass** der Körper (2) die Form eines offenen elastischen Rings mit zwei Enden hat, wobei der erste Abschnitt (10) ein Ende des Rings und der zweite Abschnitt (11) ein anderes Ende des Rings ist.

4. Klemme (1), gemäß Anspruch 1, **dadurch gekennzeichnet, dass** der erste Abschnitt (10) einen inneren Hohlraum (21) umfasst, in dem ein erstes Ende (18) des Stifts (4) mit der ersten Gelenkverbindung (C1) verbunden wird.

5. Klemme (1), gemäß Anspruch 4, **dadurch gekennzeichnet, dass** sie einen Stab (5) umfasst, der rotierend mit dem ersten Abschnitt (10) des Körpers (2) verbunden ist, und dass das erste Ende (18) des Stifts (4) mit einem Querloch (24) in dem Stab (5) verbunden ist, wobei besagter Stab (5) für die erste Gelenkverbindung (C1) zwischen dem Stift (4) und dem ersten Abschnitt (10) sorgt.

6. Klemme (1), gemäß Anspruch 5, **dadurch gekennzeichnet, dass** der Stift (4) ein Kopfteil (20) mit einem größerem Querschnitt als das Querloch (24) in dem Stab (5) umfasst.

7. Klemme (1), gemäß Anspruch 1, **dadurch gekennzeichnet, dass** der zweite Abschnitt (11) einen inneren Hohlraum (25) umfasst, in dem ein Hauptabschnitt (12) des Griffs (3) mit der zweiten Gelenkverbindung (C2) verbunden ist, wobei besagter Hauptabschnitt (12) wiederum einen inneren Hohlraum (27) umfasst, in dem ein zweites Ende (19) des Stifts (4) mit der dritten Gelenkverbindung (C3) verbunden ist.

8. Klemme (1), gemäß Anspruch 7, **dadurch gekennzeichnet, dass** sie einen Stab (8) umfasst, der rotierend mit dem Hauptabschnitt (12) des Griffs (3) verbunden ist, und dass das zweite Ende (19) des Stifts (4) mit einem Querloch (32) in besagtem Stab (8) verbunden ist, wobei besagter Stab (8) für die dritte Gelenkverbindung (C3) zwischen dem Stift (4) und dem Griff (3) sorgt.

9. Klemme (1), gemäß Anspruch 8, **dadurch gekennzeichnet, dass** das zweite Ende (19) des Stifts (4) mit einem Gewinde versehen ist, so dass die Einschubtiefe des besagten zweiten Endes (19) in das Querloch (32) in dem Stab (8) verstellt werden kann.

10. Klemme (1), gemäß Anspruch 9, **dadurch gekennzeichnet, dass** das Querloch (32) in dem zweiten Ende (19) des Stifts (4) ein zusätzliches Gewinde hat.

## Revendications

1. Collier de serrage (1) pour fixer la position d'un tube de selle par rapport à un cadre de vélo, ce collier de serrage comprenant :
- un corps (2) élastique disposé autour d'un espace interne (9) qui accueille une partie du cadre et une partie du tube de selle, où ledit corps (2) comprend une première portion (10) et une deuxième portion (11) qui se font face à une distance variable, permettant d'augmenter ou réduire la taille de l'espace interne (9), où une première connexion articulée (C1) est prévue dans ladite première portion (10) et une deuxième connexion articulée (C2) est prévue dans ladite deuxième portion (11) ;
- une poignée (3) connectée à la deuxième connexion articulée (C2), ladite poignée (3) comprenant une troisième connexion articulée (C3) qui est excentrée par rapport à la deuxième connexion articulée (C2), où ladite poignée (3) comprend une zone de prise (13) pour permettre à l'utilisateur de faire tourner la poignée (3) par rapport à la deuxième connexion articulée (C2), où
- les connexions articulées (C1, C2, C3) tournent par rapport aux trois axes à pivot (15, 16, 17) respectifs qui sont parallèles entre eux, et **caractérisé par le fait que**
- un axe (4) fixé longitudinalement à la première connexion articulée (C1) et à la troisième connexion articulée (C3) pour enfoncer la première portion (10) du corps (2) vers la deuxième portion (11) du corps (2) ; où
- la distance (d13) entre la première connexion articulée (C1) et la troisième connexion articulée (C3) est réglable par l'opération de cet axe (4).

2. Collier de serrage (1), conformément à la revendication 1, **caractérisé par le fait que** les axes à pivot (15, 16, 17) des connexions articulées (C1, C2, C3) sont désalignés lorsque la poignée (3) est tournée au maximum contre le corps (2).

3. Collier de serrage (1), conformément à la revendication 1, **caractérisée par le fait que** le corps (2) a la forme d'une bague élastique ouverte avec deux extrémités, où la première portion (10) est une extrémité de la bague et la deuxième portion (11) est une autre extrémité de la bague.

4. Collier de serrage (1), conformément à la revendication 1, **caractérisé par le fait que** la première portion (10) comprend une cavité intérieure (21), à l'intérieur de laquelle une première extrémité (18) de l'axe (4) est connectée à la première connexion articulée (C1).

5. Collier de serrage (1), conformément à la revendication 4, **caractérisé par le fait qu'**il comprend une tige (5) connectée en rotation à la première portion (10) du corps (2), et **par le fait que** la première extrémité (18) de l'axe (4) est connectée à un orifice transversal (24) dans la tige (5), ladite tige (5) fournissant la première connexion articulée (C1) entre l'axe (4) et la première portion (10).

6. Collier de serrage (1), conformément à la revendication 5, **caractérisé par le fait que** l'axe (4) comprend une tête (20) avec une section transversale plus grande que l'orifice transversal (24) de la tige (5).

7. Collier de serrage (1), conformément à la revendication 1, **caractérisé par le fait que** la deuxième portion (11) comprend une cavité intérieure (25) à l'intérieur de laquelle une portion principale (12) de la poignée (3) est connectée à la deuxième connexion articulée (C2), où ladite portion principale (12) à son tour comprend une cavité intérieure (27) à l'intérieur de laquelle une deuxième extrémité (19) de l'axe (4) est connectée à la troisième connexion articulée (C3).

8. Collier de serrage (1), conformément à la revendication 7, **caractérisé par le fait qu'**il comprend une tige (8) connectée en rotation à la portion principale (12) de la poignée (3), et **par le fait que** la deuxième extrémité (19) de l'axe (4) est connectée à un orifice transversal (32) dans la tige (8), ladite tige (8) fournissant la troisième connexion articulée (C3) entre l'axe (4) et la poignée (3).

9. Collier de serrage (1), conformément à la revendication 8, **caractérisée par le fait que** la deuxième extrémité (19) de l'axe (4) est filetée de telle sorte que la profondeur de l'insertion de ladite deuxième extrémité (19) dans l'orifice transversal (32) de la tige (8) peut être réglée.

10. Collier de serrage (1), conformément à la revendication 9, **caractérisé par le fait que** l'orifice transversal (32) sur la deuxième extrémité (19) de l'axe (4) a un filetage complémentaire.
